# EUROPÄISCHE PATENTSCHRIFT

(11) **EP 4 079 204 B1**
(45) Veröffentlichungstag und Bekanntmachung des Hinweises auf die Patenterteilung: **30.04.2025**
(21) Anmeldenummer: 22169671.9
(22) Anmeldetag: 25.04.2022
(51) Int. Cl.: A47K 3/40

(54) **DUSCHBODENELEMENT UND VERFAHREN ZU DESSEN HERSTELLUNG**
SHOWER TRAY ELEMENT AND METHOD OF MAKING THE SAME
ÉLÉMENT DE FOND DE DOUCHE ET SON PROCÉDÉ DE FABRICATION

(30) Priorität: 23.04.2021 DE 202021102201 U
(43) Veröffentlichungstag der Anmeldung: 26.10.2022
(73) Patentinhaber: Dauksch, Enrico, 01558 Großenhain (DE)
(72) Erfinder: Dauksch, Enrico, 01558 Großenhain (DE)
(74) Vertreter: Lippert Stachow Patentanwälte Rechtsanwälte Partnerschaft mbB

(56) Entgegenhaltungen:
- DE-U1- 202005 018 684
- JP-A- H09 124 828

## Beschreibung

Die Erfindung betrifft allgemein ein Duschbodenelement und ein Verfahren zu dessen Herstellung.

Um bestimmten Anforderungen hinsichtlich Wärme- und/oder Schallisolierung zu entsprechen, sollen die Duschbodenelemente entsprechende isolierende Eigenschaften aufweisen. Zu diesem Zweck weisen derartige Duschbodenelemente häufig eine Dämmplatte auf, die aus einem Hartschaum besteht.

Die derzeit verwendeten Duschbodenelemente sind oft als Verbundplatten ausgebildet und weisen einen Kern meist aus einem extrudierten Polystyrol auf, welcher beidseitig von einer versteifenden, den Schaumstoff vor Beschädigungen schützenden und als Haftuntergrund für die Deckschicht des Bauteils dienenden Schutzschicht bedeckt ist. Extrudiertes Polystyrol weist eine hohe Dichte und Druckfestigkeit auf und hat eine homogene Struktur.

Hartschaum aus expandiertem Polystyrol ist demgegenüber durch seine grobkörnige Struktur charakterisiert. Expandiertes Polystyrol wird aufgrund seiner sehr geringen Wärmeleitfähigkeit als einlagige Platte zur Wärme- und Trittschalldämmung verwendet. Als Verbundplatte ist es mitunter als einseitige Lage an steifen Platten, wie beispielsweise Gipskarton, angebracht.

Beispielsweise ist aus der DE 20 2005 018684 U1 ein aus expandiertem Polystyrol-Partikelschaumstoff gebildeter Tragkörper für ein Duschbodenelement bekannt. Unmittelbar auf dem Tragkörper ist eine Haftvermittlungsschicht aufgebracht. Die Rohdichte des Tragkörpers beträgt mindestens 60 kg/m³, so dass die bei bestimmungsgemäßen Gebrauch auf die sanitäre Oberfläche ausgeübten Vertikalkräfte zu keiner Beeinträchtigung der Verhaftung führen.

Beide genannten Hartschaummaterialien weisen eine geringe Dichte und eine geschlossenzellige Struktur auf. Sie sind beständig gegenüber Einwirkungen von Wasser und Feuchtigkeit. Letzteres trifft aufgrund der gleichmäßigen Struktur insbesondere auf extrudiertes Polystyrol zu.

Außerdem ist aus der JP H09 124828 A ein geschäumtes Material zur Herstellung von Etiketten bekannt, in das durch Oberflächenbearbeitung Schriftzüge **o. ä.** eingebracht werden können.

Der Nachteil der bekannten Duschbodenelemente besteht in deren ungünstiger energetischer Bilanz hinsichtlich der energieintensiven Herstellung, des nur bedingt möglichen Recyclings und der aufwendigen Entsorgung bzw. Verwertung. Darüber hinaus bewirkt das oberseitige benötigte Dichtelement in Verbindung mit Polystyrol als Tragelement im Verlaufe der Zeit von der Herstellung bis zum Einbau ein Schüsseln der Verbundplatte und möglicherweise deren Bruch beim Einbau. Zur Verhinderung des Schüsselns werden dickere Tragelemente verwendet, die zudem auf der Rückseite ein Gegenzugelement aufweisen müssen.

Es besteht daher ein Bedarf an Duschbodenelementen, welche als Bodenelemente für Duschplätze verwendbar sind und dafür die erforderliche Ebenheit und geringe Dicke aufweisen, um insbesondere für Duschplätze mit geringem Höhenaufbau verwendbar zu sein, so dass diese auch bodengleich ausgebildet werden können.

Zur Lösung der Aufgabenstellung werden ein Duschbodenelement gemäß Anspruch 1 sowie ein Verfahren zum Herstellen eines Duschbodenelements gemäß Anspruch 12 angegeben Auf die Ansprüche 1 und 12 rückbezogene Ansprüche stellen vorteilhafte Ausgestaltungen dar.

Gattungsgemäß weisen derartige Duschbodenelemente ein Tragelement und ein Deckelement mit zwischenliegendem Dichtelement auf.

Erfindungsgemäß ist das Tragelement aus einer Hartschaumplatte aus Polyethylenterephthalat gefertigt. Die Hartschaumplatte weist ein Dichtelement zur Herstellung einer wasserdichten Schicht auf.

Eine Hartschaumplatte aus Polyethylenterephthalat bedeutet, dass die Hartschaumplatte im Wesentlichen aus Polyethylenterephthalat besteht. D. h. neben Polyethylenterephthalat können nicht mechanisch wirkende Zusatzstoffe wie **z. B.** Farbpigmente, Brandschutzmittel, pilzhemmende Mittel etc. enthalten sein. Unter Hartschaum wird ein geschäumtes Material bzw. Schaumstoff verstanden, das bzw. der einer Verformung unter Druckbelastung einen derart hohen Widerstand entgegensetzt, dass es bzw. er als Konstruktionsmaterial genutzt werden kann.

Die Hauptvorteile einer Hartschaumplatte aus Polyethylenterephthalat sind hervorragende mechanische Eigenschaften bei geringem Gewicht.

Hartschaumplatten aus Polyethylenterephthalat können in Langzeitermüdungsprüfungen eine strukturelle und dimensionale Langzeitstabilität nachgewiesen werden, die insbesondere für Bauprodukte wünschenswert ist. Die langfristige Stabilität der Dämmeigenschaften und damit verbunden der sicheren Dämmleistung und ebenso die feuchtigkeitsabweisende geschlossenzellige und homogene Struktur sind Eigenschaften, welche in Räumen wünschenswert sind, in welchen eine mäßige bis hohe Feuchtebelastung zu erwarten ist. Hinzu kommt die Beständigkeit gegenüber Lösungsmitteln, Säuren, Salzen und anderen Stoffen. Die homogene Oberfläche gestattet zudem eine glatte und auch glänzende Beschichtung, die auch als fertige Oberfläche nutzbar und leicht zu reinigen ist.

Es besteht zudem eine Kompatibilität mit zahlreichen verschiedenen Produktionsmethoden und Beschichtungssystemen für die Hartschaumplatte, so dass individuelle Materialkombinationen möglich sind. Diese Eigenschaft unterstützt vorteilhaft die Kombination der Hartschaumplatte mit der in Feuchträumen erforderlichen fachgerechten Abdichtung. Die Oberflächengüte und die weitreichende Materialkompatibilität gestatten die Verbindung der Hartschaumplatte mit einem Dichtelement zur Herstellung einer wasserdichten Schicht, **z. B.** für die Verwendung in Feuchträumen. Optional kann ein Dichtelement gleichzeitig als Schutzschicht fungieren.

Die Verwendung von Polyethylenterephthalat ist hinsichtlich der Energiebilanz und ebenso hinsichtlich der Nachhaltigkeit des Erzeugnisses von Vorteil, wenn die Hartschaumplatte entsprechend einer Ausgestaltung der Erfindung aus recyceltem Polyethylenterephthalat besteht. Polyethylenterephthalat wird insbesondere zur Herstellung von Trinkflaschen und verschiedensten Lebensmittelfolien verwendet, die nach Gebrauch entsorgt und zunehmend der Wiederaufbereitung zugeführt werden. Somit steht ein Rohstoff mit guter Energiebilanz zur Verfügung, der mit geeigneten produktionsbegleitenden Maßnahmen eine klimaneutrale Produktion des Polyethylenterephthalats gestattet und der selbst wieder recycelbar ist.

Erfindungsgemäß sind das Dichtelement und die Hartschaumplatte miteinander verklebt. Bevorzugt sind sie vollflächig miteinander verklebt.

Dadurch kann die Stabilität erhöht werden. Außerdem kann eine möglichst gleichmäßige mechanische Verbindung zwischen der Verbundplatte bzw. der Hartschaumplatte und dem Dichtelement gewährleistet werden, so dass **z.B.** Spannungsbeanspruchungen nicht zu einer Rissbildung führen und eine hohe Langzeitstabilität erreicht werden kann.

Das Dichtelement und die Hartschaumplatte können bevorzugt mit einem Polymerklebstoff auf Silanbasis miteinander verklebt sein. Ein solcher Klebstoff kann **z. B.** silanmodifizierte Polymere auf Polyetherbasis enthalten, die mit Luftfeuchtigkeit oder durch Zusatzstoffe vernetzen und dadurch eine starke Klebeverbindung ausbilden.

Die Vorteile solcher, auch als MS-Klebstoff bezeichneten, Klebstoffe sind die Ausbildung dauerhaft elastischer Klebeverbindungen, die beispielsweise häufig wiederholten Bewegungen standhalten, ohne dass die Klebeverbindung durch Sprünge, Risse und/oder Ablösungen beeinträchtigt wird. Zudem sind diese Klebstoffe im Wesentlichen schadstofffrei, **d. h.** sie enthalten beispielsweise keine Lösungsmittel oder Isocyanate, und lassen sich daher einfach und sicher verarbeiten.

Entsprechend weiterer Ausgestaltungen der Erfindung kann die Hartschaumplatte auf zumindest einer Seite, optional auf den beiden gegenüberliegenden Oberflächen oder auf allen Seiten des Schaums eine Schutzschicht aufweisen. Als Schutzschichten können beispielsweise Fließschichten verwendet werden, die optional Verstärkungsfasern aufweisen können. Auch mineralische Beschichtungen sind als Schutzschichten und andere Schutzschichten sind verwendbar, wie nachfolgend dargelegt wird. Beispielsweise kann auch ein Dichtelement als Schutzschicht fungieren.

Die erfindungsgemäße Verwendung von Polyethylenterephthalat als Hartschaumplatte des Duschbodenelements in Verbindung mit der dauerelastischen Verklebung mittels Polymerklebstoff auf Silanbasis gestattet es, auf das aus dem Stand der Technik bekannte Gegenzugelement auf der Unterseite der Hartschaumplatte zu verzichten. Soweit dort eine Schutzschicht zur Vermeidung von Beschädigungen der mitunter nur wenige Zentimeter, beispielsweise 2 oder 3 cm, dünnen Hartschaumplatten, angeordnet ist, genügen Schutzschichten mit einer Dicke von 0,3 und kleiner, bevorzugt von kleiner oder gleich als 0,2 mm**.** Derartige Schutzschichten dienen beispielsweise dem Schutz beim der Handhabung im Herstellungsprozess, dem Transport, der Lagerung, dem Verkauf oder dem Einbau. Wird hier auf andere Weise, beispielsweise durch geeignete Halterungen, Lagerart, Verpackungen, temporäre Schutzmaßnahmen beispielsweise an den Seitenflächen der Hartschaumplatte oder andere Maßnahmen, eine Schädigung vermieden, kann auf eine Schutzschicht zumindest auf der Rückseite vollständig verzichtet werden.

Im Vergleich zum Stand der Technik wird die Energiebilanz des Duschbodenelements weiter verbessert, selbst bei der Ausbildung einer rückseitigen Schutzschicht. Die Hartschaumplatte wird leichter und dünner. Zudem wird weniger Material für ein Duschbodenelement benötigt. Zur Verbesserung der Energiebilanz des erfindungsgemäßen Duschbodenelements gestattet das dafür verwendete Material auch den Einsatz eines CO₂-reduzierten Mörtels, **z. B.** Earth Friendly Mortar, oder Betons zur Herstellung eines Duschbodens.

Entsprechend weiterer Ausgestaltungen der Erfindung kann das Dichtelement auf verschiedene Weise ausgebildet sein. Beispielsweise kann es folienartig oder vliesartig ausgebildet sein.

Als Folie werden regelmäßig homogene Flächengebilde angesehen, welche aus einem dünnen, den betreffenden Anforderungen, hier der dauerhaften und gegebenenfalls rissüberbrückenden Wasserdichtheit, entsprechendem Material bestehen.

Vliesartige Dichtelemente sind Flächengebilde, welche aus Natur- oder Chemiefasern bestehen, welche ausgerichtet oder ungeordnet aufeinanderliegend angeordnet sind. Die Spinnfasern oder Filamente sind miteinander verklebt, verschweißt, vernäht oder vernadelt. Sie weisen im Vergleich zu folienartigen Dichtelementen eine höhere Dehnbarkeit und ebenso eine Wasserdichtheit auf.

Beide Varianten können beispielsweise in Abhängigkeit von der Größe der Bauplatte durch aneinandergereihte und miteinander wasserdicht verbundene Dichtbahnen ausgeführt sein. Alternativ kann ein folienartiges oder ein vliesartiges Dichtelement ganzflächig ausgeführt sein. Auch eine Kombination mit einer Beschichtung, beispielsweise mittels einer aushärtenden Dichtmasse, ist möglich.

Das Dichtelement kann alternativ oder in Kombination miteinander auf zumindest einer Oberfläche der Hartschaumplatte und/oder als eine Schicht innerhalb der Hartschaumplatte ausgebildet sein. Eine Dichtebene innerhalb der Verbundplatte stellt eine weitere Schicht im Verbund dar und kann ebenfalls wie zuvor beschrieben ausgebildet und ausgeführt sein. Alternativ ist auch in einer solchen Ausführungsform eine Beschichtung möglich.

Darüber hinaus verbessert der Klebstoff die Dichtheit des mit dem erfindungsgemäßen Duschbodenelements hergestellten Duschplatzes. Neben der dauerelastischen Eigenschaft hat der Klebstoff selbst wasserdichte Eigenschaften, so dass er bei vollflächigem Auftrag eine ergänzende Dichtebene Darstellt.

Die hohe Materialverträglichkeit gestattet es auch, dass das Dichtelement sowohl auf der Oberfläche der Hartschaumplatte angeordnet, beispielsweise verklebt ist, als auch anstelle einer Schutzschicht auf der Hartschaumplatte einseitig aufgebracht ist. Optional können die Dichtelemente auch beidseitig der Hartschaumplatte als Schutzschicht fungieren.

Der fachmännische Einbau von Dichtelementen erfordert üblicherweise einen wasserdichten Anschluss an die angrenzenden Bauteile. Entsprechend einer weiteren Ausgestaltung der Bauplatte kann das Dichtelement zumindest abschnittsweise seitlich über die Verbundplatte, also in Verlängerung der Plattenebene der Verbundplatte, hinausragen, **d. h.** die Bauplatte kann ein über den Rand der Verbundplatte überstehendes Dichtelement aufweisen. Eine solche Bauplatte ist geeignet, mit den angrenzenden Bauteilen derart verbunden zu werden, dass der wasserdichte Anschluss einfach, reproduzierbar und zuverlässig sowie ohne zusätzliche Dichtbänder hergestellt werden kann. Der überstehende Rand und das Dichtelements können integral oder mehrteilig ausgebildet sein. Bei einer mehrteiligen Ausführung ist die Verbindung zwischen dem Dichtelement auf der Verbundplatte und dem überstehenden Rand augenscheinlich wasserdicht ausgebildet.

Der Hartschaumkern aus Polyethylenterephthalat ist eine thermoformbare flexible Platte, so dass vor der Ausbildung der aussteifenden Schutzschichten eine Formgebung der Platte möglich ist. Mit der Formgebung kann der Hartschaumkern beispielsweise an bauliche Gegebenheiten angepasst werden. Auch Verformungen innerhalb einer Oberfläche sind möglich. Beispielsweise kann die Hartschaumplatte zumindest abschnittsweise uneben und/oder zumindest einseitig uneben sein, **d. h.** die Punkte einer Oberfläche der Hartschaumplatte liegen nicht in einer Ebene. Optional kann die Bauplatte Rück- oder Vorsprünge oder abgeschrägte Bereiche aufweisen.

Struktur- und Isolierschäume aus Polyethylenterephthalat weisen niedrige Dichten im Bereich von 30 bis ca. 300 kg/m³, bevorzugt von 60 bis ca. 300 kg/m³ auf, wodurch sich verschiedene Verwendungen und Gestaltungen ergeben, die zudem mit der gewünschten Stabilität und Dämmung erzielt werden können. Die hohe Stabilität wird unter anderem durch eine Druckfestigkeit des Polyethylenterephthalats erreicht, die im Bereich von 100 bis 2.000 kPa, beispielsweise im Bereich von 200 bis 2.000 kPa, liegen kann. Die geringe Dichte bei hoher Stabilität in Verbindung mit der Vielgestaltigkeit der Oberfläche gestattet auch die Vorfertigung von fertigen Raumkomponenten, wie Duschzellen oder ganze Badzellen unter Verwendung der beschriebenen Hartschaumplatte.

Das Tragelement wird auf einem geeigneten Untergrund bzw. Unterbau verlegt. Es ist tragfähig genug, um in Verbindung mit dem Untergrund bzw. Unterbau das standardgemäße Gewicht des Nutzers des Duschplatzes zu tragen, so dass wasserdichte Anschlüsse des Dichtelements an angrenzende Bauteile sowie an Abflüsse nicht reißen.

Häufig es ist erforderlich, dass derartige Duschbodenelemente nur eine geringe Höhe aufweisen, so dass sie, gegebenenfalls auch einschließlich der Abflussleitungen und/oder einer Stufe oder Schwelle, im Fußbodenaufbau vollständig integriert werden können. Zur Reduzierung der Aufbauhöhe können Duschbodenelemente mit einem vor Ort herzustellenden Fliesenbelag oder mit einem oberflächenfertigen, plattenartigen Deckelement belegt sein. Letzteres kann eine geringere Dicke als Fliesenbelag aufweisen und zudem sehr variabel und individuell den Kundenwünschen entsprechend gestaltet werden, sowohl hinsichtlich der Geometrie als auch des Oberflächendesigns.

Das Deckelement kann ein separates Element sein oder entsprechend einer weiteren Ausgestaltung integral mit der Bauplatte ausgebildet sein. Eine derartige einteilige Ausbildung mit der Bauplatte kann beispielsweise durch eine Beschichtung erfolgen, mit welcher eine für die Verwendung des Duschbodenelements fertige Oberfläche hergestellt wird. Eine solche oberflächenfertige Schicht des Duschbodenelements kann beispielsweise eine Beschichtung durch einen Mineralwerkstoff oder eine oberflächenfertige Betonspachtelung sein.

Bei einer mehrteiligen Ausbildung des Duschbodenelements können für das Deckelement alternativ zum Fliesenbelag oder zu einer ein- oder mehrteiligen Mineralstoffplatte andere Plattenbelege verwendet werden, wie beispielsweise Kompaktschichtstoffplatten, auch als HPL-Platten (High Pressure Laminate-) bezeichnet, oder ähnliches.

Sowohl die integrale als auch die zweiteilige Ausbildung von Tragelement und Deckelement des Duschbodenelements kann einseitig, in diesem Fall augenscheinlich oberseitig, oder zweiseitig ausgebildet sein. Eine zweiseitige Ausbildung verleiht dem Duschbodenelement eine höhere Stabilität an sich, beispielsweise während der Handhabung bei Herstellung, bei Lagerung, bei Transport und beim Einbau, sowie eine höhere Formstabilität. Beides ist ein wesentliches Qualitätsmerkmal insbesondere für die zunehmend dünner werdenden Duschbodenelemente für den fußbodengleichen Einbau.

Aufgrund der hohen Materialkompatibilität des Hartschaumkerns aus Polyethylenterephthalat kann auch eine solche ein- oder beidseitig ausgebildete oberflächenfertige Beschichtung verwendet werden, die gleichzeitig als Schutzschicht(en) der Bauplatte fungiert bzw. fungieren.

In dem Tragelement ist der Ablauf für das Duschwasser ausgebildet. Dieser schließt eine Ablauföffnung sowie einen in der Oberseite des Tragelements eingearbeiteten Ablaufbereich ein. Letzterer weist ein zur Ablauföffnung verlaufendes Gefälle auf, wobei Grundriss und Grad des Gefälles den planerischen Vorgaben und Regeln folgend variabel ausgebildet sein können. Die Oberseite des Tragelements kann zudem einen planen, **d. h.** in einer Ebene liegenden, Randbereich aufweisen. Augenscheinlich soll ein solcher um den Betrag des Gefälles über der Ablauföffnung stehender Randbereich verhindern, dass in dem Duschbodenelement stehendes Wasser an tieferen Stellen über den Rand abfließen oder an aufstehenden Wänden stehen kann. Die Breite des Randbereichs kann sehr variabel gestaltet, auch sehr schmal sein.

Als Ober- und Unterseite bzw. Vorder- und Rückseite der genannten Elemente wird infolge des horizontalen Einbaus des Duschbodenelements üblicherweise die, der Schwerkraftrichtung folgende, obere und untere Oberfläche des betreffenden Elements bezeichnet. Die beide Oberflächen verbindenden Flächen sind, ebenfalls gemäß der allgemein üblichen Bezeichnung, die Seitenflächen.

Das gattungsgemäße Duschbodenelement umfasst weiter ein Deckelement, welches beispielsweise als Deckplatte oder Deckschicht ausgebildet sein kann. Das Deckelement weist ebenfalls eine Ablauföffnung auf, welche augenscheinlich hinsichtlich Lage und Größe zur Ablauföffnung des Tragelements korrespondiert. Das Deckelement ist auf geeignete Weise mit der Oberseite des Tragelements fest verbunden. Es kann als ein- oder mehrteilige Platte, als auf dem Tragelement bauseits aufgebrachter Bodenbelag, beispielsweise Fliesenbelag, oder als Beschichtung des Tragelements ausgeführt sein. Als oberflächenfertiges Deckelement oder Beschichtung des Tragelements eignet sich beispielsweise ein mineralischer Werkstoff.

Das gattungsgemäße Duschbodenelement umfasst weiter ein Dichtelement, welches der Herstellung und Aufrechterhaltung einer wasserdichten Schicht zwischen dem Tragelement und Deckelement sowie einem wasserdichten Anschluss des Duschbodenelements an den Abfluss sowie die angrenzenden Bauelemente dient. Zu diesem Zweck ist das Dichtelement zwischen dem Deckelement und dem Tragelement angeordnet. Das Dichtelement kann entsprechend einer Ausgestaltung des Duschbodenelements, wie bereits erwähnt, jenes des oben beschriebenen Tragelements mit Hartschaumkern aus Polyethylenterephthalat sein.

Das Dichtelement kann zumindest abschnittsweise, optional vollumgänglich, seitlich über das Deckelement und das Tragelement hinausragen, um nahtlose Anschlüsse an angrenzende Bauelemente herzustellen. Augenscheinlich wird spätestens im Zuge der Fertigstellung des Abflusses auch im Dichtelement eine Ablauföffnung hergestellt, welche mit den zuvor genannten korrespondiert. Zum Dichtelement wird auf die obigen Darlegungen verwiesen.

Ein derartiges Duschbodenelement kann bauseits schichtenweise aufgebaut sein. Alternativ kann das Duschbodenelement mit dem beschriebenen Schichtaufbau auch vorgefertigt sein.

Derartige Duschbodenelemente werden insbesondere bei bodengleichen Duschen verwendet, bei denen der Duschboden mit dem umgebenden Fußboden auf gleichem oder nur geringfügig höherem Höhenniveau liegt. Ein wesentlicher Vorteil dieser bodengleichen Duschen besteht in der verbesserten Zugänglichkeit infolge des Fehlens von Stufen.

Um jedoch zu gewährleisten, dass das abfließende Duschwasser auch bei hohem Wasseranfall sicher in den Auflauf geleitet wird und die Übergänge zu umgebenden Wänden und Fußböden zuverlässig und dauerhaft gegenüber anstehendem Wasser geschützt sind, sind die Ablauföffnungen und das zu letzteren hinführende Gefälle des Duschbodens entsprechend auszubilden und gegebenenfalls mit geeigneten Bodenschwellen oder Stufen geringer Höhe aus dem Duschbodenelement auf den angrenzenden Fußboden zu kombinieren.

Von Vorteil erweist es sich hierbei, dass der Hartschaumkern wie oben beschrieben verformbar ist, so dass das Gefälle und andere unebene Bereich der Hartschaumplatte durch Tiefziehen des Tragelements ausgebildet sein können, wie nachfolgend zum Verfahren näher dargelegt. Damit sind eine effiziente Herstellung des Tragelements und vielfältige Gestaltungsmöglichkeiten hinsichtlich dessen Geometrie möglich.

Ein weiterer Aspekt betrifft ein Verfahren zur Herstellung eines Duschbodenelements. Das Verfahren weist auf: Bereitstellen eines Tragelements, Anordnen eines Dichtelements auf dem Tragelement und Anordnen eines Deckelements auf dem Dichtelement.

Erfindungsgemäß ist vorgesehen, dass als Tragelement eine Hartschaumplatte angeordnet wird, wobei die Hartschaumplatte aus Polyethylenterephthalat gefertigt ist und ein Dichtelement auf und/oder in der Hartschaumplatte (3) angeordnet wird, und zwar mittels eines Polymerklebers auf Silanbasis. Zur Herstellung einer wasserdichten Schicht wird das Dichtelement mit der Hartschaumplatte mit dem Polymerkleber verklebt.

Mittels des vorgeschlagenen Verfahrens kann eines der vorstehend beschriebenen Duschbodenelemente hergestellt werden. Die Erläuterungen zu diesen Duschbodenelementen sind entsprechend auf deren Herstellungsverfahren übertragbar. Mit dem Herstellungsverfahren sind die Vorteile der Duschbodenelemente entsprechend verbunden.

Gemäß verschiedenen Ausführungsvarianten kann das Bereitstellen des Tragelements die folgenden Schritte aufweisen: Bereitstellen einer aus Polyethylenterephthalat gefertigten Hartschaumplatte, optionales Anordnen einer Schutzschicht mit einer Dicke von kleiner oder gleich 0,3 mm,, bevorzugt kleiner oder gleich 0,2 mm, auf einer ersten Oberfläche der Hartschaumplatte und Herstellen einer wasserdichten Schicht mittels Anordnen eines Dichtelements auf der anderen Oberfläche der Hartschaumplatte und/oder als eine Schicht innerhalb der Hartschaumplatte. Mit anderen Worten kann die Bauplatte mittels der vorstehend genannten Schritte ausgebildet werden. Optional kann eine weitere Schutzschicht auf der zweiten Oberfläche der Hartschaumplatte ausgebildet sein. Als Oberfläche sind hier die Flächen der Ober- und Unterseite des plattenförmigen Elements bezeichnet.

Gemäß weiteren Ausführungsvarianten können das Dichtelement und die Hartschaumplatte miteinander verklebt, optional vollflächig miteinander verklebt, werden.

Zum Verkleben des Dichtelements mit der Verbundplatte oder der Hartschaumplatte kann ein Klebstoff auf eine Oberfläche des Dichtelements und/oder eine Oberfläche der Verbundplatte bzw. der Hartschaumplatte aufgesprüht werden.

Das Aufsprühen des Klebstoffs stellt eine einfache Applikationsmöglichkeit für den Klebstoff dar, mit der ein sehr gleichmäßiger Auftrag des Klebstoffs erreicht werden kann. Dadurch kann eine Klebeverbindung mit homogenen Eigenschaften erzielt werden, was sich positiv auf die mechanischen Eigenschaften der Klebeverbindung und die Langzeitstabilität der Bauplatte auswirkt und zudem, wie oben dargestellt, eine weitere flächigen Abdichtung bilden kann.

Optional kann der Klebstoff vor dem Aufsprühen erwärmt werden, **z. B.** auf eine Temperatur im Bereich zwischen 20 °C und 40 °C, beispielsweise 30 °C. Das Aufsprühen kann beispielsweise bei einer Temperatur im Bereich zwischen 15 °C und 35 °C, beispielsweise bei 20 °C, erfolgen. Hierfür können beispielsweise Bauteile der Sprühvorrichtung, wie z**.** B. Schläuche, Düsen etc., auf eine Temperatur im genannten Bereich erwärmt werden.

Das Erwärmen des Klebstoffs kann die Verringerung der Viskosität des Klebstoffs und dadurch die Verwendung von Klebstoffen, die bei Umgebungstemperatur zu fest für die Verwendung in einem Sprühverfahren wären, ermöglichen. Zudem kann der Auftrag des Klebstoffs gleichmäßiger erfolgen. Dadurch können die mechanischen Eigenschaften der Klebeverbindung weiter verbessert werden.

Bevorzugt können das Dichtelement und die Hartschaumplatte mittels eines Polymerklebstoffs auf Silanbasis miteinander verklebt werden.

Das Verkleben des Dichtelements mit der Hartschaumplatte kann mittels eines Stempels oder einer Membran erfolgen. Dabei werden die zu verklebenden Flächen der Hartschaumplatte und des Dichtelements einander mit einem Abstand gegenüberliegend oder übereinanderliegend angeordnet. Nachfolgend wird das Dichtelement mittels des Stempels oder mittels der Membran vollflächig auf die Verbundplatte oder die Hartschaumplatte gepresst bis eine Klebeverbindung hergestellt ist. Optional kann die Membran mittels eines gas- oder flüssigkeitsgefüllten Stempelkissens auf die Verbundplatte oder die Hartschaumplatte gepresst werden. Weiter kann die Membran optional Bestandteil des Stempelkissens sein.

Die Anwendung eines Stempelseines Stempelkissens oder einer Membran zur Herstellung der Klebeverbindung gestattet einen gleichmäßigen und vollflächigen Kontakt zwischen beiden miteinander zu verklebenden Flächen und damit eine zuverlässige Verklebung sowie die Ausbildung einer homogenen Dichtfläche. Zudem lässt sich mittels des beschriebenen Klebeverfahrens eine Klebeverbindung besonders schnell ausbilden.

Optional können im Tragelement unebene Abschnitte und/oder ein Gefälle durch Tiefziehen während der Herstellung des Tragelements ausgebildet werden. Die Beibehaltung der Plattendicke im tiefgezogenen Bereich der Hartschaumplatte, wie von Tiefziehverfahren metallischer Platten bekannt, ist dabei nicht erforderlich. Je nach gewünschtem Profil der Hartschaumplatte können die Vertiefungen ein- oder beidseitig ausgebildet werden. Das Tiefziehen kann auf verschiedene Weise erfolgen, beispielsweise mit Tiefziehwerkzeug, wie Matrize und Stempel, oder mit einem Tiefziehmedium, wie einem flüssigkeits- oder einem gasgefüllten Stempelkissen.

Entsprechend einer Ausführungsform des Verfahrens wird das Gefälle in der Oberseite des Tragelements eingebracht, indem dessen Hartschaumplatte auf eine, optional ebenen, Unterlage gelegt wird und mittels eines Stempels oder Stempelkissens, optional ebenfalls unter Zwischenlage einer Membran, oberseitig verformt wird. Bei dem Stempelkissen handelt es sich um ein bevorzugt mit einer Flüssigkeit, optional mit einem Gas gefülltes Kissen, dessen unterseitige Oberflächenform jener des herzustellenden Gefälles entspricht.

Entsprechend einer weiteren Ausführungsform kann das Tiefziehen zur Herstellung des Gefälles mit dem Verkleben des Dichtelements mit der Hartschaumplatte kombiniert und alternativ in einem oder in zwei aufeinander folgenden Verfahrensschritten ausgeführt werden.

Das Tiefziehen kann optional unter Einwirkung von Wärme ausgeführt werden, wobei die Temperatur offensichtlich in einem solchen Bereich gewählt wird, welcher eine Schwächung der Trageigenschaften oder eine strukturelle, die Verwendbarkeit der Hartschaumplatte und/oder des Dichtelements beeinträchtigende Schädigung des Hartschaums vermeidet.

Die Erfindung soll nachfolgend anhand von Ausführungsbeispielen näher erläutert werden. Der Fachmann würde die zuvor sowie die nachfolgend beschriebenen Merkmale in weiteren Ausführungsbeispielen miteinander kombinieren, soweit ihm das sinnvoll erscheint. Die zugehörigen Zeichnungen zeigen in
- Fig. 1A: ein Tragelement eines Duschbodenelements in Explosionsdarstellung,
- Fig. 1B: ein erfindungsgemäßes Duschbodenelement unter Verwendung eines Tragelements gemäß Fig. 1A, ebenfalls in Explosionsdarstellung, und
- Fig. 2: ein Duschbodenelement in der Draufsicht.

Die Figuren dienen lediglich der Erläuterung der Erfindung. Sie zeigen nur die dafür notwendigen Details. Sie erheben keinen Anspruch auf Vollständigkeit oder Maßstäblichkeit.

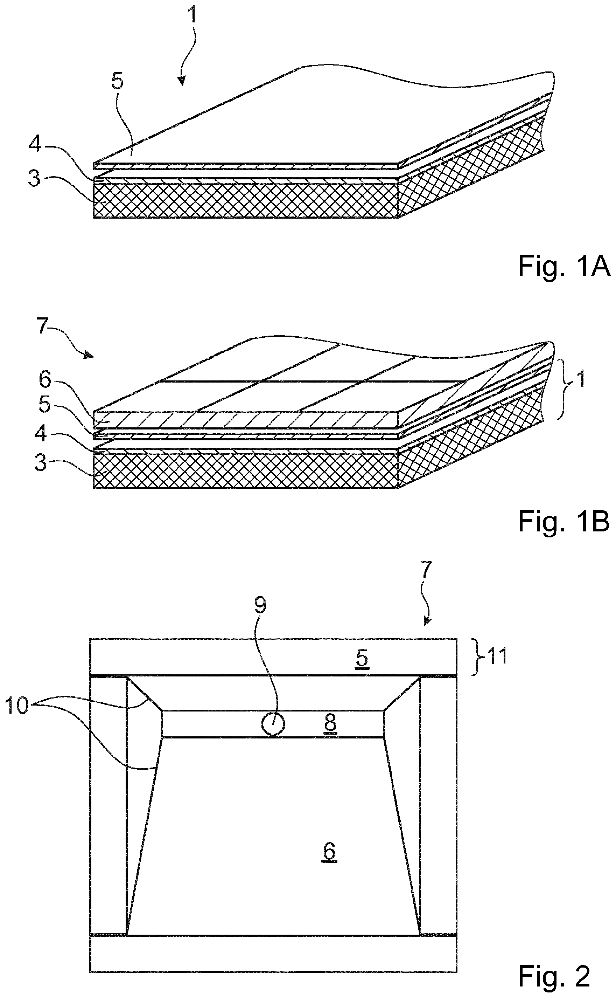

Fig. 1 zeigt ein Tragelement 1, welches für ein Duschbodenelement 7 (Fig. 2) verwendet werden kann, in einer schematischen Darstellung. Das Tragelement 1 umfasst eine Hartschaumplatte 3 mit dem oberseitig darauf angeordneten Dichtelement 5. Die Hartschaumplatte 3 besteht aus Polyethylenterephthalat.

Das Dichtelement 5 ist mittels Kleberschicht 4 eines einkomponentigen, luft- und feuchtigkeitshärtenden Konstruktionsklebstoffs auf MS-Polymerbasis auf die Hartschaumplatte 3 ganzflächig bzw. vollflächig geklebt. Das Dichtelement 5 hat beispielhaft, jedoch nicht beschränkend die Größe der Hartschaumplatte 3.

Fig. 1B zeigt die Tragelement 1 mit Hartschaumplatte 3 und Dichtelement 5 gemäß Fig. 1A. Insoweit wird auf die vorherigen Darlegungen verwiesen.

Auf das Dichtelement 5 ist oberseitig ein weiteres plattenartiges Element mittels eines geeigneten Klebematerials (nicht dargestellt) aufgebracht. Das weitere plattenartige Element dient als Deckelement 6 und bildet den oberflächenfertigen Abschluss eines Duschbodenelements 7. Das Deckelement 6 ist beispielhaft, jedoch nicht beschränkend als mehrteilige Platte, beispielsweise Fliesenbelag, ausgebildet.

Fig. 2 zeigt ein Duschbodenelement 7 in der Draufsicht. Der obere, in Fig. 2 sichtbare Abschluss des Duschbodenelements 7 ist durch ein einteiliges, oberflächenfertiges Deckelement 6 aus beispielsweise, jedoch nicht beschränkend, einem Mineralwerkstoff oder Kunststoff, gebildet. Das Deckelement 6 ist wie zu Fig. 1B beschrieben auf dem Tragelement (in Fig. 2 nicht dargestellt) angeordnet und fixiert.

Das Deckelement 6 weist eine Ablaufrinne 8 auf, in welcher mittig eine kreisförmige Ablauföffnung 9 ausgebildet ist. Das Deckelement 6 weist zudem fachmännisch ausgebildete Gefälle 10, welche ausgehend von jeder Seitenkante des Deckelements 6 zu jeweils der korrespondierenden Seitenkante der Ablaufrinne 8 verlaufen.

Das unter dem Deckelement 6 angeordnete Dichtelement 5 weist einen umlaufenden Überstand 11 auf, welcher seitlich über die Bauplatte (in Fig. 2 nicht dargestellt) hinausragt. Die Eckbereiche des Überstandes 11 sind derart ausgebildet, dass der Überstand 11 gegebenenfalls an angrenzenden senkrechten Bauteile (nicht dargestellt) angelegt und die Eckbereiche überlappt werden können.

### Bezugszeichenliste

- 1: Bauplatte
- 3: Hartschaumplatte
- 4: Kleberschicht
- 5: Dichtelement
- 6: Deckelement
- 7: Duschbodenelement
- 8: Ablaufrinne
- 9: Ablauföffnung
- 10: Gefälle
- 11: Überstand

## Patentansprüche

1. Duschbodenelement (7) zur Herstellung der Standfläche eines Duschplatzes, mit einer Hartschaumplatte (3) als Tragelement und einem oberseitig angeordneten Deckelement (6) sowie mit einem unter dem Deckelement (6) liegendem Dichtelement (5) zur Herstellung einer wasserdichten Schicht, **dadurch gekennzeichnet, dass** die Hartschaumplatte (3) aus Polyethylenterephthalat gefertigt ist und das Dichtelement (5) und die Hartschaumplatte (3) mit einem Polymerkleber auf Silanbasis miteinander verklebt sind.

2. Duschbodenelement (7) nach Anspruch 1, **dadurch gekennzeichnet, dass** die Hartschaumplatte (3) aus einem recycelten Polyethylenterephthalat besteht.

3. Duschbodenelement (7) nach einem der vorstehenden Ansprüche, **dadurch gekennzeichnet, dass** die Hartschaumplatte (3) unterseitig eine Schutzschicht mit einer Schichtdicke kleiner oder gleich 0,3 mm oder keine solche Schutzschicht aufweist.

4. Duschbodenelement (7) nach einem der vorstehenden Ansprüche, **dadurch gekennzeichnet, dass** das Dichtelement (5) folienartig oder vliesartig ausgebildet ist und/oder als Dichtbahn oder als Beschichtung ausgeführt ist.

5. Duschbodenelement (7) nach einem der vorstehenden Ansprüche, **dadurch gekennzeichnet, dass** das Dichtelement (5) auf einer Oberfläche der Hartschaumplatte (3) und/oder als eine Schicht innerhalb der Hartschaumplatte (3) ausgebildet ist.

6. Duschbodenelement (7) nach einem der vorstehenden Ansprüche, **dadurch gekennzeichnet, dass** das Dichtelement (5) zumindest abschnittsweise seitlich über die Verbundplatte (2) hinausragt.

7. Duschbodenelement (7) nach einem der vorstehenden Ansprüche, **dadurch gekennzeichnet, dass** die Hartschaumplatte (3) mehrlagig ausgebildet und/oder zumindest abschnittsweise uneben und/oder zumindest einseitig uneben ist.

8. Duschbodenelement (7) nach einem der vorstehenden Ansprüche, **dadurch gekennzeichnet, dass** die Hartschaumplatte (3) eine Dichte im Bereich zwischen 30 bis 300 kg/m³ und/oder eine Druckfestigkeit im Bereich von 0,2 bis 2,0 MPa aufweist.

9. Duschbodenelement (7) nach einem der vorstehenden Ansprüche, **dadurch gekennzeichnet, dass** das Dichtelement (5) und die Hartschaumplatte (3) vollflächig miteinander verklebt sind.

10. Duschbodenelement (7) nach einem der vorstehenden Ansprüche, **dadurch gekennzeichnet, dass** das Deckelement (6) einteilig mit der Hartschaumplatte (3) und den Dichtelement (5) ausgebildet ist.

11. Duschbodenelement (7) nach einem der vorstehenden Ansprüche, **dadurch gekennzeichnet, dass** das Duschbodenelement (7) eine Ablauföffnung (9) und in seiner Oberseite ein zur Ablauföffnung (9) hin verlaufendes Gefälle (10) aufweist, welches mittels Tiefziehen in der Hartschaumplatte (3) ausgebildet ist.

12. Verfahren zur Herstellung eines Duschbodenelements (7), das Verfahren aufweisend:
- Bereitstellen einer Hartschaumplatte (3) als Tragelement,
- Anordnen eines Dichtelements (5) zur Herstellung einer wasserdichten Schicht und
- Anordnen eines Deckelements (6) auf dem Tragelement, **dadurch gekennzeichnet, dass** die Hartschaumplatte (3) aus Polyethylenterephthalat gefertigt ist und das Dichtelement (5) auf und/oder in der Hartschaumplatte (3) angeordnet wird, wobei das Dichtelement (5) zur Herstellung einer wasserdichten Schicht mittels eines Polymerklebers auf Silanbasis mit der Hartschaumplatte (3) verklebt wird.

13. Verfahren nach Anspruch 12, **dadurch gekennzeichnet, dass** der Polymerkleber auf zumindest eine der zu miteinander zu verklebenden Oberflächen vollflächig aufgebracht und/oder aufgesprüht wird.

14. Verfahren nach Anspruch 12 oder 13, **dadurch gekennzeichnet, dass** der Polymerkleber vor seinem Auftrag auf eine Oberfläche auf eine Temperatur im Bereich zwischen 20 °C und 40 °C erwärmt wird.

15. Verfahren nach einem der Ansprüche 12 bis 14, **dadurch gekennzeichnet, dass** das miteinander Verkleben der Oberflächen der Hartschaumplatte und des Dichtelements und/oder das Einprägen eines Gefälles in die Oberseite der Hartschaumplatte mittels eines Stempels oder eines gas- oder flüssigkeitsgefüllten Stempelkissens erfolgt.

## Claims

1. Shower floor element (7) for producing the standing surface of a shower area, with a rigid foam plate (3) as a supporting element and a cover element (6) arranged on the top and with a sealing element (5) located under the cover element (6) for producing a waterproof layer, **characterized in that** the rigid foam plate (3) is made of polyethylene terephthalate and the sealing element (5) and the rigid foam plate (3) are glued together with a silane-based polymer adhesive.

2. Shower floor element (7) according to claim 1, **characterized in that** the rigid foam plate (3) consists of a recycled polyethylene terephthalate.

3. Shower floor element (7) according to one of the preceding claims, **characterized in that** the rigid foam plate (3) has a protective layer with a layer thickness of less than or equal to 0.3 mm on the underside or no such protective layer.

4. Shower floor element (7) according to one of the preceding claims, **characterized in that** the sealing element (5) is designed as a film or fleece and/or as a sealing sheet or as a coating.

5. Shower floor element (7) according to one of the preceding claims, **characterized in that** the sealing element (5) is formed on a surface of the rigid foam plate (3) and/or as a layer within the rigid foam plate (3).

6. Shower floor element (7) according to one of the preceding claims, **characterized in that** the sealing element (5) projects laterally beyond the composite panel (2) at least in sections.

7. Shower floor element (7) according to one of the preceding claims, **characterized in that** the rigid foam plate (3) is formed in multiple layers and/or is uneven at least in sections and/or uneven at least on one side.

8. Shower floor element (7) according to one of the preceding claims, **characterized in that** the rigid foam plate (3) has a density in the range between 30 and 300 kg/m³ and/or a compressive strength in the range of 0.2 to 2.0 MPa.

9. Shower floor element (7) according to one of the preceding claims, **characterized in that** the sealing element (5) and the rigid foam plate (3) are glued together over their entire surface.

10. Shower floor element (7) according to one of the preceding claims, **characterized in that** the cover element (6) is formed integrally with the rigid foam plate (3) and the sealing element (5).

11. Shower floor element (7) according to one of the preceding claims, **characterized in that** the shower floor element (7) has a drain opening (9) and in its upper side a slope (10) running towards the drain opening (9), which is formed by deep drawing in the rigid foam plate (3).

12. Method for producing a shower floor element (7), the method comprising:
- Providing a rigid foam plate (3) as a supporting element,
- arranging a sealing element (5) to produce a waterproof layer and
- Arranging a cover element (6) on the support element, **characterized in that** the rigid foam plate (3) is made of polyethylene terephthalate and the sealing element (5) is arranged on and/or in the rigid foam plate (3), wherein the sealing element (5) is glued to the rigid foam plate (3) by means of a silane-based polymer adhesive to produce a waterproof layer.

13. Method according to claim 12, **characterized in that** the polymer adhesive is applied and/or sprayed onto at least one of the surfaces to be bonded together over the entire surface.

14. Method according to claim 12 or 13, **characterized in that** the polymer adhesive is heated to a temperature in the range between 20 °C and 40 °C before it is applied to a surface.

15. Method according to one of claims 12 to 14, **characterized in that** the bonding of the surfaces of the rigid foam plate and the sealing element and/or the imprinting of a slope into the upper side of the rigid foam plate is carried out by means of a stamp or a gas- or liquid-filled stamp pad.

## Revendications

1. Élément de sol de douche (7) pour la réalisation de la surface d'appui d'une zone de douche, avec une plaque de mousse rigide (3) comme élément porteur et un élément de recouvrement (6) disposé sur le dessus et avec un élément d'étanchéité (5) situé sous l'élément de recouvrement (6) pour la réalisation d'une couche étanche à l'eau, **caractérisé en ce que** la plaque de mousse rigide (3) est en polyéthylène téréphtalate et l'élément d'étanchéité (5) et la plaque de mousse rigide (3) sont collés ensemble avec un adhésif polymère à base de silane.

2. Élément de sol de douche (7) selon la revendication 1, **caractérisé en ce que** la plaque de mousse rigide (3) est constituée d'un polyéthylène téréphtalate recyclé.

3. Élément de sol de douche (7) selon l'une des revendications précédentes, **caractérisé en ce que** la plaque de mousse rigide (3) présente une couche de protection d'une épaisseur inférieure ou égale à 0,3 mm sur la face inférieure ou ne présente pas de telle couche de protection.

4. Élément de sol de douche (7) selon l'une des revendications précédentes, **caractérisé en ce que** l'élément d'étanchéité (5) est conçu sous la forme d'un film ou d'un non-tissé et/ou d'une feuille d'étanchéité ou d'un revêtement.

5. Élément de sol de douche (7) selon l'une des revendications précédentes, **caractérisé en ce que** l'élément d'étanchéité (5) est formé sur une surface de la plaque de mousse rigide (3) et/ou en tant que couche à l'intérieur de la plaque de mousse rigide (3).

6. Élément de sol de douche (7) selon l'une des revendications précédentes, **caractérisé en ce que** l'élément d'étanchéité (5) dépasse latéralement du panneau composite (2) au moins par sections.

7. Élément de sol de douche (7) selon l'une des revendications précédentes, **caractérisé en ce que** la plaque de mousse rigide (3) est formée de plusieurs couches et/ou est inégale au moins par sections et/ou inégale au moins sur un côté.

8. Élément de sol de douche (7) selon l'une des revendications précédentes, **caractérisé en ce que** la plaque de mousse rigide (3) a une densité comprise entre 30 et 300 kg/m³ et/ou une résistance à la compression comprise entre 0,2 et 2,0 MPa.

9. Élément de sol de douche (7) selon l'une des revendications précédentes, **caractérisé en ce que** l'élément d'étanchéité (5) et la plaque de mousse rigide (3) sont collés ensemble sur toute leur surface.

10. Élément de sol de douche (7) selon l'une des revendications précédentes, **caractérisé en ce que** l'élément de recouvrement (6) est formé d'un seul tenant avec la plaque de mousse rigide (3) et l'élément d'étanchéité (5).

11. Élément de sol de douche (7) selon l'une des revendications précédentes, **caractérisé en ce que** l'élément de sol de douche (7) comporte une ouverture d'évacuation (9) et, dans sa face supérieure, une pente (10) s'étendant vers l'ouverture d'évacuation (9), qui est formée par emboutissage profond dans la plaque de mousse rigide (3).

12. Procédé de fabrication d'un receveur de douche (7), le procédé comprenant :
- la fourniture d'une plaque de mousse rigide (3) comme élément de support,
- la mise en place d'un élément d'étanchéité (5) pour produire une couche étanche á l'eau et
- Disposer un élément de recouvrement (6) sur l'élément de support, **caractérisé en ce que** la plaque de mousse rigide (3) est en polyéthylène téréphtalate et l'élément d'étanchéité (5) est disposé sur et/ou dans la plaque de mousse rigide (3), l'élément d'étanchéité (5) étant collé à la plaque de mousse rigide (3) au moyen d'un adhésif polymère à base de silane pour produire une couche étanche á l'eau.

13. Procédé selon la revendication 12, **caractérisé en ce que** l'adhésif polymère est appliqué et/ou pulvérisé sur toute la surface d'au moins l'une des surfaces à coller ensemble .

14. Procédé selon la revendication 12 ou 13, **caractérisé en ce que** l'adhésif polymère est chauffé à une température comprise entre 20 °C et 40 °C avant d'être appliqué sur une surface.

15. Procédé selon l'une des revendications 12 à 14, **caractérisé en ce que** le collage des surfaces de la plaque de mousse rigide et de l'élément d'étanchéité et/ou l'impression d'une pente dans la face supérieure de la plaque de mousse rigide est réalisée au moyen d'un tampon ou d'un tampon encreur rempli de gaz ou de liquide.
